**Europäisches Patentamt**

**European Patent Office**

**Office européen des brevets**

(11) Veröffentlichungsnummer : **0 365 890 B1**

(19)

# (12) EUROPÄISCHE PATENTSCHRIFT

(45) Veröffentlichungstag der Patentschrift :
**16.12.92 Patentblatt 92/51**

(51) Int. Cl.⁵ : **B29C 61/10, H02G 15/18**

(21) Anmeldenummer : **89118555.5**

(22) Anmeldetag : **06.10.89**

(54) **Band aus einem wärmerückstellbaren Kunststoff.**

(30) Priorität : **22.10.88 DE 3836144**
**19.11.88 DE 3839217**

(43) Veröffentlichungstag der Anmeldung :
**02.05.90 Patentblatt 90/18**

(45) Bekanntmachung des Hinweises auf die
Patenterteilung :
**16.12.92 Patentblatt 92/51**

(84) Benannte Vertragsstaaten :
**AT BE CH DE ES FR GB GR IT LI NL SE**

(56) Entgegenhaltungen :
**EP-A- 0 023 418**

(56) Entgegenhaltungen :
**EP-A- 0 116 392**
**FR-A- 2 332 599**
**GB-A- 1 155 470**
**GB-A- 2 126 801**
**US-A- 4 399 840**
**PATENT ABSTRACTS OF JAPAN, Band 4, Nr.**
**84 (M-16)[566], 17. Juni 1980, Seite 53 M 16; &**
**JP-A-55 042 822 (NIPPON DENSHINDENWA**
**KOSHA) 26-03-1980**

(73) Patentinhaber : **kabelmetal electro GmbH**
**Kabelkamp 20 Postfach 260**
**W-3000 Hannover 1 (DE)**

(72) Erfinder : **Marx, Karl-Heinz, Ing.**
**Zehntweg 25**
**W-3008 Garbsen 9 (DE)**

**Beschreibung**

Die Erfindung betrifft ein Band aus einem wärmerückstellbaren Kunststoff mit an den senkrecht zur Schrumpfrichtung verlaufenden gegenüberliegenden Längskanten des Bandes angeordneten Verstärkungen, über die ein Halteelement vorzugsweise nach dem Herumlegen des Bandes um ein einzuhüllendes Substrat geschoben wird, um die Längskanten während des Schrumpfvorgangs zusammenzuhalten.

Aus der DE-PS 15 25 815 ist eine Umwickelmanschette zum Umhüllen von z. B. Kabelverbindungen bekannt, die aus einem wärmerückstellbaren Kunststoffband besteht, welches an zwei Längskanten Stege aufweist, über welche nach dem Herumlegen der Manschette um das einzuhüllende Substrat eine Schiene geschoben wird, die während und auch nach dem Schrumpfen des Bandes die Längskanten zusammenhält und eine dauerhafte Abdichtung des Längsspaltes gewährleistet.

Aus der EP-OS 0 116 392 ist eine Umwickelmanschette bekannt, die aus einem wärmeschrumpfenden Gewebe besteht, welches in einer Kunststoffmatrix eingebettet ist. Die beiden quer zur Schrumpfrichtung verlaufenden Längskanten sind schlaufenartig umgelegt und umschließen dabei Formstäbe. Durch die Formstäbe werden Verdickungen gebildet, über die eine Verschlußschiene geschoben werden kann, die die Längskanten wie oben beschrieben zusammenhält.

Die zuerst genannte Umwickelmanschette hat den Nachteil, daß die Herstellung solcher Manschetten recht aufwendig ist. Auch die Einbringung von verstärkenden Geweben insbesondere in den Bereich der Stege ist nicht möglich. Die Umwickelmuffe nach der EP-OS 0 116 392 hat den Vorteil, daß sie von kontinuierlich, d. h. in großen Längen, gereckten Bändern abgenommen und konfektioniert werden kann. Wärmeschrumpfende oder verstärkende Gewebe lassen sich hierbei auch im Bereich der für das Verschließen der Manschette vorgesehenen Längskanten anordnen. Nachteilig ist jedoch, daß die Abdichtung des Spaltes zwischen den Verdickungen sehr schwierig ist, da die für die Aktivierung des Heißschmelzklebers erforderliche von außen aufzubringende Wärme zweimal die Wandung und eine ggfs vorgesehene Kleberlasche durchdringen muß. Das bedeutet, daß das Erwärmen der in Berührung miteinander gelangten Längskanten bzw. Verdickungen äußerst zeitaufwendig ist, wodurch es zu einer Überhitzung und u. U. zu einer Zerstörung des wärmeschrumpfbaren Kunststoffes kommen kann. Insbesondere besteht die Gefahr, daß infolge schlechter Durchwärmung eine von außen nicht erkennbare Undichtigkeit entsteht.

Anordnungen zum Verschließen der Längskanten von wärmerückstellbaren Bändern, die metallverstärkte Randbereiche aufweisen, die ineinanderhakbar sind, sind aus der EP-A-0023418 sowie der US-A-4399840 bekannt. Bei diesen Ausführungen ist keine über die Längskanten schiebbare Verschlußschiene vorgesehen.

Der Erfindung liegt von daher die Aufgabe zugrunde, die bekannten Umwickelmanschetten dahingehend zu verbessern, daß diese an ihren Längskanten mit einem Verschlußsystem versehen werden, welches eine sichere und schnelle Abdichtung auch bei gewebeverstärkten oder mit wärmeschrumpfenden Geweben versehenen Umwickelmuffen gewährleistet.

Diese Aufgabe wird dadurch gelöst, daß gemäß der Erfindung jede der senkrecht zur Schrumpfrichtung verlaufenden Längskanten von einem sich über die gesamte Länge erstreckenden Metallband oder Metallgeflecht eingefaßt ist und daß die Verstärkungen durch spiralartiges Einformen der eingefaßten Längskanten oder durch je einen von den eingefaßten Längskanten schlaufenartig umhüllten langgestreckten Stab gebildet sind.

Bei dem Metallband oder Metallgeflecht handelt es sich um ein im Querschnitt gesehen U-förmig gebogenes Metallblech bzw. Metallgeflecht, welches auf die Längskanten aufgeschoben ist, oder längseinlaufend auf die Längskanten geformt ist. Durch Erwärmung der Längskanten beginnt das Band zu schrumpfen, wobei seine Wanddicke zunimmt. Die Bandkanten werden dabei innerhalb der Metallbandeinfassung festgelegt. Durch das Metallband bzw. Metallgeflecht entsteht eine sehr gute Wärmeverteilung, so daß eine Aktivierung des die Abdichtung bewirkenden Heißschmelzklebers schnell und sicher erreicht wird.

Mit besonderem Vorteil sind die Längskanten rechtwinklig abgekantet und sind die abgekanteten Bereiche spiralförmig eingerollt. Dadurch bildet sich eine relativ große Anlagefläche zwischen den Längskanten, die eine dauerhafte Abdichtung sicherstellt.

Damit die Längskanten sich gut an unterschiedliche Durchmesser anpassen können, ist das Metallblech zumindest im Bereich seiner Einformung mit senkrecht zur Einformrichtung gelegenen Schlitzen versehen. Solche Durchmessersprünge sind beispielsweise bei Kabelspleißen vorhanden, bei denen die Enden des Bandes auf den Kabelmänteln aufliegen und der Mittelbereich des Bandes z. B. eine den Spleiß umhüllende Einlage umgibt. Hier kann der Durchmesser der Einlage um den Faktor 3 bis 6 größer sein als der Durchmesser des Kabels.

Nach einer besonders vorteilhaften Weiterbildung der Erfindung ist vorgesehen, daß das Metallband bzw. Metallgeflecht sich in Schrumpfrichtung über eine solche Länge erstreckt, die mindestens dem dreifachen Außendurchmesser der Schlaufe entspricht. Der Außendurchmesser der Schlaufe setzt sich zusammen aus dem Durchmesser des Stabes sowie der zweifachen Wanddicke des Bandes im Bereich der Metallbandumfassung d. h. der zweifachen Wanddicke des Kunststoffbandes sowie der vierfachen Wanddicke des Metallbandes. Das Metallband bzw. Metallgeflecht besteht zweckmäßigerweise aus Edelstahl mit einer Wanddicke bzw. einem Drahtdurchmesser von 0,05 bis 1,0 mm. Um die Biegbarkeit der Verdickungen um eine in Schrumpfrichtung verlaufende Achse zu erhöhen, kann das Metallblech geriffelt sein.

Von Vorteil ist es ferner, daß das Metallband bzw. Metallgeflecht mit einem Kleber beschichtet ist. Dieser Kleber, mit dem das Metallband bzw. Metallgeflecht zweckmäßigerweise beidseitig beschichtet ist, dient dazu, das Metallband bzw. Metallgeflecht mit dem Kunststoffband zu verbinden und auch die zwecks Bildung der Schlaufe umgelegte Bandkante mit dem Band zu verbinden.

Zur Bildung der Schlaufe kann es auch von Vorteil sein, die miteinander in Berührung gelangten Metallbandoberflächen miteinander zu verlöten, wobei ein niedrigschmelzendes Lot bevorzugt werden sollte, um eine Überhitzung des Kunststoffes zu vermeiden.

Nach einer weiteren vorteilhaften Ausgestaltung der Erfindung ist vorgesehen, daß das Band aus einem wärmerückstellbaren Kunststoff zumindest an seiner dem zu umhüllenden Gegenstand zugekehrten Oberfläche eine Beschichtung aus einem Heißschmelzkleber aufweist und daß das Metallband zumindest in dem mit der Heißschmelzkleberschicht in Berührung stehenden Bereich gelocht ist bzw. Durchbrechungen aufweist. Die Lochungen bzw. die Durchbrechungen bezwecken, daß die Biegbarkeit der Längskanten verbessert wird. Von größerer Bedeutung ist jedoch, daß die Lochungen bzw. Durchbrechungen beim Schrumpferwärmen einen Austritt von Heißschmelzkleber ermöglichen. Dies ist insbesondere an der gegenseitigen Berührungsfläche der Längskanten nach dem Herumlegen um das zu umhüllende Substrat von Vorteil, so daß eine sichere Abdichtung des Längsspaltes der geschrumpften Umhüllung erreicht wird.

Für manche Anwendungsfälle kann es von Vorteil sein, wenn das Metallband ein Streckmetallblech ist.

Bei Verwendung eines Metallgeflechtes werden bezüglich der Wärmeverteilung die gleichen Vorteile erzielt. Bei einem Metallgeflecht tritt jedoch zusätzlich eine gute Verankerung des Kunststoffbandes, ein guter Durchtritt des Heißschmelzklebers und eine gute Biegbarkeit hinzu.

Weiterer Gegenstand der Erfindung ist ein Verfahren zur Herstellung eines Bandes, bei dem ein Kunststoffband extrudiert, vernetzt, im erwärmten Zustand gereckt und im gereckten Zustand abgekühlt wird.

Dieses Verfahren ist dadurch gekennzeichnet, daß die quer zur Schrumpf- bzw. Reckrichtung verlaufenden Längskanten über ihre gesamte Länge von einem Metallband bzw. Metallgeflecht umfaßt werden, daß die Längskanten schlaufenartig geformt werden und dabei innerhalb der Schlaufen je ein flexibler Stab angeordnet wird und daß die die Schlaufen bildenden überlappenden Längskantenbereiche mechanisch fest miteinander verbunden werden.

Mit besonderem Vorteil werden die Längskantenbereiche miteinander verklebt. Hierzu wird zweckmäßigerweise ein wärmebeständiger Kleber z. B. ein Kontaktkleber verwendet.

Zweckmäßigerweise werden die Längskanten von dem Metallband bzw. Metallgeflecht eingefaßt und unter Einbindung der Stäbe schlaufenartig umgelegt und die Schlaufen mit den Stäben vorzugsweise über die gesamte Länge verklebt.

Es kann unter Umständen erforderlich sein, das Kunststoffband und das Metallband bzw. Metallgeflecht zumindest in unmittelbarer Nähe der Längskanten mechanisch fest zu verbinden z. B. durch einen Kontaktkleber, durch Nieten, Klammern oder Nähen, wobei die letztgenannten Varianten vorteilhaft anwendbar sind bei Kunststoffbändern, die eine Verstärkungsschicht z. B. in Form eines Gewebes in ihrem Aufbau aufweisen.

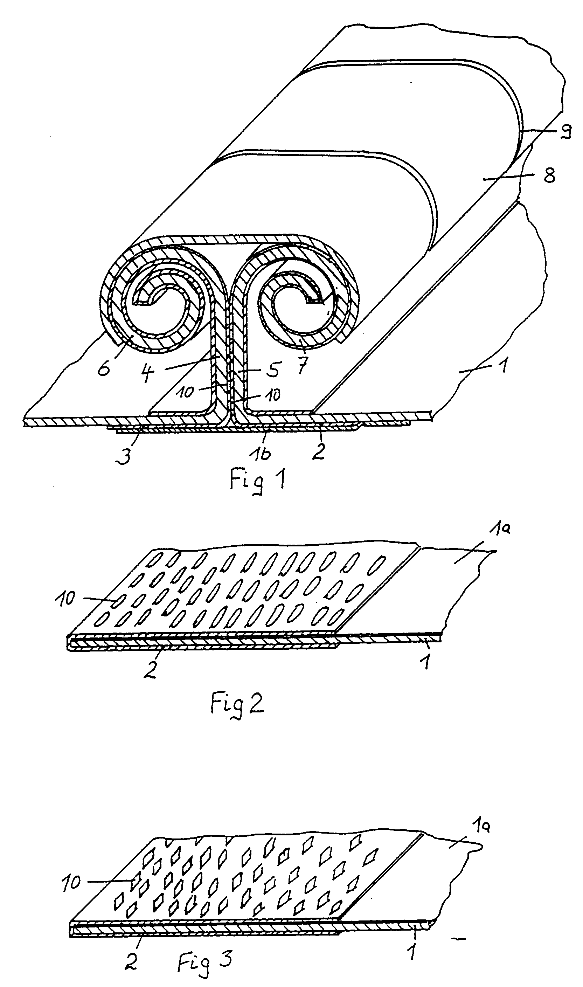

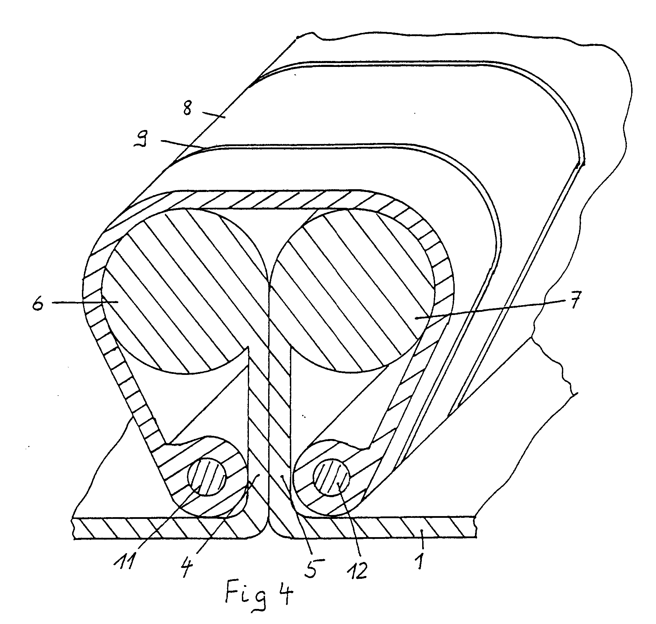

Die Erfindung ist an Hand der in den Figuren 1 bis 6 schematisch dargestellten Ausführungsbeispiels näher erläutert.

In der Figur 1 ist ein wärmerückstellbares Band 1 aus Kunststoff im Ausschnitt dargestellt, welches um ein nicht dargestelltes Substrat z. B. eine Spleißverbindung eines elektrischen Kabels nach Art einer Umwickelmuffe herumgelegt und an seinen Längskanten verschlossen ist. Die Längskanten des Bandes 1 sind in je einem Metallblech 2 und 3 eingefaßt, welches wie bei 4 und 5 dargestellt, rechtwinklig abgekantet ist. Die freien Enden der Abkantungen 4 und 5 sind nach Art einer Spirale wie bei 6 und 7 dargestellt, eingerollt. Das Zusammenhalten der Längskanten wird durch eine Schiene 8 bewirkt, die zum Zwecke der besseren Biegbarkeit mit Schlitzen 9 versehen ist. Die dargestellte Umwickelmuffe wird um das Substrat herumgelegt, die Abkantungen 4 und 5 aneinandergelegt und die Schiene 8 über die Einrollungen 6 und 7 geschoben. Nach diesen Arbeiten kann die Muffe geschrumpft werden. Während des Schrumpfvorgangs und auch danach hält die Schiene 8 die Längskanten zusammen. Bei einer solchen Anordnung ist es wesentlich, daß die Berührungsfläche zwischen den Längskanten abgedichtet ist. Vor dem eigentlichen Schrumpfvorgang wird zunächst der in der Figur 1 dargestellte Bereich der Längskanten erwärmt. Bei der Erwärmung beginnt das Band 1 zwischen den Metallblecheinfassungen 2 bzw. 3 zu schrumpfen, wobei seine Wanddicke zunimmt. Dadurch entsteht ein Klemmsitz insbesondere im Bereich der Spiralen 6 und 7. Dieser Klemmsitz wird noch verbessert, wenn das Metallblech Durchbrechungen aufweist, in welche der Kunststoff beim Schrumpfen eindringt. Solche Durchbrechungen haben noch den Vorteil, daß ein bei Schrumpftemperatur flüssig werdender Heißschmelzkleber, mit dem üblicherweise schrumpfbaren Bänder beschichtet sind, durch die Durchbrechungen hindurchtreten kann. Solche Durchbrechungen sind in der Figur 1 mit 10 bezeichnet. Dadurch, daß die Bandkanten in dem Metallblech 2 und 3 eingefaßt sind, ist ein guter Wärmetransport in den für die Abdichtung kritischen Bereich zwischen den Abkantungen 4 und 5 gewährleistet, so daß dieser Spalt sicher abgedichtet ist.

Damit die Spiralen 6 und 7 wie die Schiene 8 beim Schrumpfen des Bandes 1 an unterschiedliche Durchmesser angepaßt werden kann, sind nicht dargestellte Einschnitte vorgesehen, die sich durch die Spiralen 6 und 7 und die Abkantungen 4 und 5 erstrecken und in gleicher Richtung wie die Einschnitte 9 in der Schiene 8 verlaufen. An dem Kunststoffband 1 ist noch eine Kleberlasche 1b befestigt, die sich bis in den Bereich der gegenüberliegenden Längskante erstreckt und für eine zusätzliche Abdichtung sorgt.

Die Figuren 2 und 3 zeigen je eine Längskante des Bandes 1, welche von einem Metallblech vorzugsweise aus Edelstahl eingefaßt sind. Das Metallblech 2 weist eine Vielzahl von als Langlöcher ausgebildete Durchbrechungen 10 auf.

Langlöcher haben den Vorteil, daß sie in der gezeigten Anordnung beim Wickeln der Längskanten zu einer Spirale nicht wesentlich verformt werden. Darüberhinaus erleichtern sie den Wickelvorgang. Mit 1a ist eine Beschichtung aus Heißschmelzkleber bezeichnet.

In der Figur 3 sind die Durchbrechungen 10 dadurch gebildet, daß man ein sog. Streckmetallblech verwendet. Solche Streckmetallbleche werden dadurch hergestellt, daß man in ein Metallblech versetzt zueinander Schnitte einbringt und dann das Metallblech quer zu den Schnitten streckt.

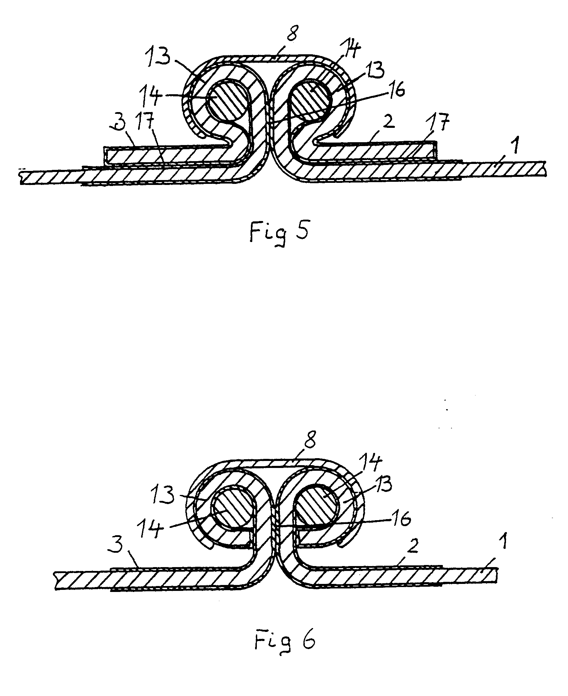

In der Figur 4 ist eine andere Ausführungsform einer Schiene 8 dargestellt. Die Schiene 8 ist als Endlosprofil aus einem bei Schrumpftemperatur mechanisch beständigem flammfesten Kunststoff hergestellt. Eingelegte biegbare Stäbe 11 und 12, die vorzugsweise aus einem Metall bzw. einem Metallseil bestehen, geben die für das Aufschieben erforderliche Festigkeit. Als Beispiel für einen geeigneten Kunststoff sei glasfaserverstärktes Polyester genannt. Die an den Längskanten vereinfacht dargestellten Verstärkungen 6 und 7 können entweder durch spiralartige Einformungen der Längskanten wie in Figur 1 oder durch schlaufenartiges Einhüllen eines langgestreckten Stabes wie in Figur 5 oder 6 gebildet werden, wobei die Metallbandeinfassungen der Deutlichkeit halber fortgelassen sind.

Die Metallbleche 2 und 3 werden zweckmäßigerweise nach dem Herumformen auf die Längskanten aufgewalzt. Jedoch ist auch ein Aufstecken U-förmig gebogener Metallbleche möglich.

Die Einschnitte in die Spiralen 6 und 7 und die Abkantungen 4 und 5 sollten den gleichen Abstand zueinander haben wie die Einschnitte 9 in der Schiene, damit eine Biegung der Spiralen 6 und 7 bzw. der Ankantungen 4 und 5 beim Schrumpfvorgang nicht behindert wird.

Die Figuren 5 und 6 zeigen je einen Schnitt durch ein anderes Verschlußsystem für eine Manschette, die ebenfalls für die Umhüllung einer nicht dargestellten Kabelverbindung geeignet ist. Die Manschette ist im wesentlichen ein Band 1 aus einem vernetzten Kunststoff, welches vorgereckt und im Falle einer Erwärmung auf die Abmessung vor dem Recken rückschrumpfbar ist. Die Längskanten des Bandes 1 sind von je einem Edelstahlblech 2 und 3 eingefaßt. Die von dem Metallblech 2 eingefaßten Längskantenbereiche des Bandes 1 sind nach Art einer Schlaufe 13 geformt, in deren Innern ein langgestreckter Stab 14, z. B. aus einer Vielzahl von Glasfäden angeordnet ist. Über die durch die Stäbe 14 und die Schlaufen 13 gebildete Verstärkungen ist eine Verschlußschiene 8 geschoben, welche die Längskanten des Bandes 1 während des Schrumpfprozesses zusammenhält.

Die Metallbleche 2 und 3 sind vorzugsweise auf die Längskanten des gereckten Bandes 1 aufgeformt, so daß beim Erwärmen des Verschlusses durch das Schrumpfverhalten des Bandes (Wanddickenzunahme) eine Selbsthemmung auftritt, so daß ein Herausziehen des Bandes 1 aus der Metallbandeinfassung 2 und 3 verhindert wird. Das Metallband 2 und 3 weist vorteilhafterweise eine Vielzahl von nicht dargestellten Durchbrechungen auf, vorzugsweise im Bereich 16 der Berührungsflächen der Längskanten. Diese Maßnahme ermöglicht für den Fall, daß das Kunststoffband 1 an seiner dem zu umhüllenden Substrat zugekehrten Oberfläche eine nicht näher bezeichnete Beschichtung aus einem Schmelzkleber aufweist, den Austritt des Schmelzklebers, der für eine gute Abdichtung des Bereichs 16 sorgt. Bei dem Metallband 2 bzw. 3 handelt es sich um ein copolymer- oder heißschmelzkleberbeschichtetes Edelstahlband von ca. 0,2 mm Wanddicke. Nach dem Einhüllen der Stäbe 14 werden die überlappenden Bandkanten bei 17 verklebt.

Die Figur 6 zeigt ein weiteres Ausführungsbeispiel nach der Lehre der Erfindung. Die Stäbe 14 werden bei diesem Ausführungsbeispiel beim Einrollen oder danach an dem Metallblech 2 bzw. 3 der Schlaufen 13 festgeklebt.

Der wesentliche Vorteil der Erfindung ist darin zu sehen, daß durch das Metallband 2 bzw. 3 ein optimaler Wärmetransport während des Schrumpferwärmens in den besonders gefährdeten Bereich 16 erreicht wird, und dort zu einem Aufschmelzen des Klebers und somit für eine gute Abdichtung sorgt.

**Patentansprüche**

1. Band aus einem wärmerückstellbaren Kunststoff mit an den senkrecht zur Schrumpfrichtung verlaufenden gegenüberliegenden Längskanten des Bandes angeordneten Verstärkungen, über die ein Halteelement vorzugsweise nach dem Herumlegen des Bandes um ein einzuhüllendes Substrat geschoben wird, um die Längskanten während des Schrumpfvorgangs zusammenzuhalten, dadurch gekennzeichnet, daß jede der senkrecht zur Schrumpfrichtung verlaufenden Längskanten von einem sich über die gesamte Länge erstreckenden Metallband (2,3) oder Metallgeflecht eingefaßt ist und daß die Verstärkungen durch spiralartiges Einformen der eingefaßten Längskanten oder durch je einen von den eingefaßten Längskanten schlaufenartig umhüllten langgestreckten Stab gebildet sind.

2. Band nach Anspruch 1, dadurch gekennzeichnet, daß die Längskanten rechtwinklig abgekantet sind und die abgekanteten Bereiche (4,5,6,7) spiralförmig eingerollt sind.

3. Band nach Anspruch 1, dadurch gekennzeichnet, daß das Metallblech oder Metallgeflecht (2,3) zumindest im Bereich seiner Einformung (6,7) mit senkrecht zur Einformrichtung gelegenen Schlitzen versehen ist.

4. Band nach Anspruch 1, dadurch gekennzeichnet, daß das Metallband oder Metallgeflecht (2,3) sich in Schrumpfrichtung gesehen über eine solche Länge erstreckt, die mindestens dem dreifachen Außendurchmesser der Schlaufe (3) entspricht.

5. Band nach Anspruch 1 oder einem der folgenden, dadurch gekennzeichnet, daß das Metallband oder Metallgeflecht (2,3) aus Edelstahl mit einer Wanddicke bzw. einem Drahtdurchmesser von 0,05 bis 1,0 mm besteht.

6. Band nach einem oder mehreren der Ansprüche 1 bis 5, dadurch gekennzeichnet, daß das Metallband oder Metallgeflecht (2,3) mit einem Kleber beschichtet ist.

7. Band nach einem oder mehreren der Ansprüche 1 bis 6, dadurch gekennzeichnet, daß das Band (1) aus einem wärmerückstellbaren Kunststoff zumindest an seiner dem zu umhüllenden Gegenstand zugekehrten Oberfläche eine Beschichtung aus einem Heißschmelzkleber aufweist und daß das Metallband (2,3) zumindest in dem mit der Heißschmelzkleberschicht in Berührung stehenden Bereich gelocht ist bzw. Durchbrechungen aufweist.

8. Band nach einem oder mehreren der Ansprüche 1 bis 7, dadurch gekennzeichnet, daß das Metallband (2,3) aus einem Streckmetall besteht.

9. Verfahren zur Herstellung eines Bandes nach einem oder mehreren der Ansprüche 1 bis 8, bei dem ein Band extrudiert, vernetzt, im erwärmten Zustand gereckt und im gereckten Zustand abgekühlt wird, dadurch gekennzeichnet, daß die quer zur Schrumpf- bzw. Reckrichtüng verlaufenden Längskanten über ihre gesamte Länge von einem Metallband bzw. Metallgeflecht umfaßt werden, daß die Längskanten schlaufenartig geformt und dabei innerhalb der Schlaufen je ein flexibler Stab angeordnet wird und daß die die Schlaufen bildenden überlappenden Längskantenbereiche mechanisch fest miteinander verbunden werden.

10. Verfahren nach Anspruch 9, dadurch gekennzeichnet, daß die überlappenden Längskantenbereiche miteinander verklebt werden.

11. Verfahren nach Anspruch 9 oder 10, dadurch gekennzeichnet, daß die Längskanten von dem Metallband bzw. Metallgeflecht eingefaßt, und unter Einbindung der Stäbe schlaufenartig umgelegt werden und die Schlaufen mit den Stäben vorzugsweise über ihre gesamte Länge verklebt werden.

**Claims**

1. Band of a plastic which can regain its shape under heat, having reinforcements arranged on the opposite longitudinal edges running perpendicularly to the direction of shrinking, over which reinforcements a holding element is pushed, preferably after wrapping the band around a substrate to be sheathed, in order to hold the longitudinal edges together during the shrinking operation, characterised in that each of the longitudinal edges running perpendicularly to the direction of shrinking is bordered by a metal band (2, 3) or metal braid extending over the entire length and in that the reinforcements are formed by spiral-like forming-in of the bordered longitudinal edges or by in each case an elongated rod sheathed in a loop-like manner by the bordered longitudinal edges.

2. Band according to Claim 1, characterised in that the longitudinal edges are bent-off at right angles and the bent-off regions (4, 5, 6, 7) are rolled-in in a spiral-shaped manner.

3. Band according to Claim 1, characterised in that the metal sheet or metal braid (2, 3) is provided at least in the region of its forming-in (6, 7) with slits situated perpendicularly to the direction of forming-in.

4. Band according to Claim 1, characterised in that, seen in the direction of shrinking, the metal band or metal braid (2, 3) extends over a length which corresponds at least to three times the outside diameter of the loop (3).

5. Band according to Claim 1 or one of the following claims, characterised in that the metal band or metal braid (2, 3) consists of special steel with a wall thickness or a wire diameter of 0.05 to 1.0 mm.

6. Band according to one or more of Claims 1 to 5, characterised in that the metal band or metal braid (2, 3) is coated with an adhesive.

7. Band according to one or more of Claims 1 to 6, characterised in that the band (1) of a plastic which can regain its shape under heat has, at least on its surface facing the article to be sheathed, a coating of a hot-melt adhesive and in that the metal band (2, 3) is perforated, or has openings, at least in the region in contact with the hot-melt adhesive layer.

8. Band according to one or more of Claims 1 to 7, characterised in that the metal band (2, 3) consists of an expanded metal.

9. Process for producing a band according to one or more of Claims 1 to 8, in which a band is extruded, crosslinked, stretched in the heated state and cooled in the stretched state, characterised in that the longitudinal edges running transversely to the direction of shrinking or stretching are embraced over their entire length by a metal band or metal braid, in that the longitudinal edges are shaped in a loop-like manner and in each case a flexible rod is thereby arranged within the loops and in that the overlapping longitudinal edge regions forming the loops are firmly connected mechanically to one another.

10. Process according to Claim 9, characterised in that the overlapping longitudinal edge regions are adhesively bonded to one another.

11. Process according to Claim 9 or 10, characterised in that the longitudinal edges of the metal band or metal braid are bordered, and are turned over in a loop-like manner, fixing in the rods, and the loops are adhesively bonded to the rods, preferably over their entire length.

**Revendications**

1. Bande constituée d'un plastique rétractable à chaud, avec des renforts qui sont disposés sur les bords longitudinaux de la bande situés en face l'un de l'autre et orientés perpendiculairement à la direction du retrait et le long desquels on pousse un élément d'arrêt, de préférence après avoir enroulé la bande autour d'un substrat à envelopper, pour maintenir ensemble les bords longitudinaux pendant le processus de retrait, bande caractérisée par le fait que chacun des bords longitudinaux, orientés perpendiculairement à la direction du retrait, est inséré dans un ruban métallique (2,3) ou un treillis métallique qui s'étend sur toute la longueur et par le fait que les renforts sont obtenus par mise en forme de spirale des bords longitudinaux ainsi insérés, ou sont constitués par une barre qui s'étend longitudinalement et qu'enveloppe, à la façon d'une boucle, respectivement, l'un des bords longitudinaux ainsi insérés.

2. Bande selon la revendication 1, caractérisée par le fait que les bords longitudinaux sont rabattus à angle droit et que les zones rabattues (4,5,6,7) sont enroulées en spirale.

3. Bande selon la revendication 1, caractérisée par le fait que la tôle métallique ou le treillis métallique (2,3) présente au moins dans la zone de la mise en forme (6,7) des échancrures placées perpendiculairement à la direction de mise en forme.

4. Bande selon la revendication 1, caractérisée par le fait que la bande métallique ou le treillis métallique (2,3) s'étend, vu dans la direction du retrait, sur une longueur telle qu'elle correspond au moins à trois fois le diamètre extérieur de la boucle (3).

5. Bande selon la revendication 1 ou l'une des suivantes, caractérisée par le fait que la bande métallique ou le treillis métallique (2,3) sont constitués d'acier inoxydable d'une épaisseur de paroi ou d'un diamètre de fil de 0,05 à 1,0 mm.

6. Bande selon une ou plusieurs des revendications 1 à 5, caractérisée par le fait que la bande métallique ou le treillis métallique (2,3) sont revêtus d'une colle.

7. Bande selon l'une ou plusieurs des revendications 1 à 6, caractérisée par le fait que la bande (1), constituée d'un plastique rétractable à chaud, présente, au moins à sa surface orientée vers l'objet à envelopper, une couche de colle fondant à chaud et par le fait que la bande de métal (2,3) au moins dans la zone qui vient en contact avec la couche de colle fondant à chaud, est perforée ou présente des perforations.

8. Bande selon l'une ou plusieurs des revendications 1 à 7, caractérisée par le fait que la bande métallique (2,3) est constituée d'un métal déployé.

9. Procédé de fabrication d'une bande selon une ou plusieurs des revendications 1 à 8, dans lequel on extrude, on réticule, on étire à l'état chaud et on refroidit à l'état étiré une bande, procédé caractérisé par la fait que les bords longitudinaux, orientés perpendiculairement à la direction du retrait ou de l'étirage, sont enserrés, sur toute leur longueur, par une bande métallique ou par un treillis métallique, par le fait que l'on donne aux bords longitudinaux la forme d'une boucle et que l'on dispose à l'intérieur de chacune des boucles une barre flexible et par le fait que l'on solidarise mécaniquement l'une à l'autre les zones des bords longitudinaux qui se recouvrent en formant la boucle.

10. Procédé selon la revendication 9, caractérisé par le fait que l'on colle l'une à l'autre les zones des bords longitudinaux qui se recouvrent.

11. Procédé selon la revendication 9 ou 10, caractérisé par le fait que l'on insère les bords longidudinaux dans une bande métallique ou dans un treillis métallique et qu'on les enroule en forme de boucle en y encastrant les barres puis que l'on colle les boucles avec les barres, de préférence sur toute leur longueur.

Fig 1

Fig 2

Fig 3

Fig 4

Fig 5

Fig 6